Europäisches Patentamt

(19) European Patent Office

Office européen des brevets

(11) Publication number: **0 287 538 B1**

# (12) EUROPEAN PATENT SPECIFICATION

(45) Date of publication of patent specification :
18.09.91 Bulletin 91/38

(51) Int. Cl.⁵: **H01P 1/04**, H01P 11/00, F16L 19/08

(21) Application number : **88850109.5**

(22) Date of filing : **30.03.88**

(54) **Arrangement for attaching a flange to a wave guide.**

(30) Priority : **13.04.87 SE 8701538**

(43) Date of publication of application :
**19.10.88 Bulletin 88/42**

(45) Publication of the grant of the patent :
**18.09.91 Bulletin 91/38**

(84) Designated Contracting States :
**CH DE FR GB IT LI NL**

(56) References cited :
**FR-A- 2 125 655**
**FR-A- 2 237 102**
**GB-A- 925 279**
**US-A- 3 972 013**

(73) Proprietor : **TELEFONAKTIEBOLAGET L M ERICSSON**
**S-126 25 Stockholm (SE)**

(72) Inventor : **Olsson, Kurt Gunnar**
**Lyckan 8107**
**S-442 92 Kungälv (SE)**

(74) Representative : **Lövgren, Tage et al**
**Telefonaktiebolaget L M Ericsson Patent Department**
**S-126 25 Stockholm (SE)**

EP 0 287 538 B1

## Description

### TECHNICAL FIELD

The present invention relates to an arrangement for attaching a first flange to a wave guide, the flange having first and second opposite surfaces being intended as a coupling member for coupling wave guides end-to-end and having an opening engaging the outer surface of the wave guide along its cross section, the arrangement including a second flange for fastening to said second surface of said first flange and having a cross section in relation to the cross section of the first flange such that in its fastened position it engages against the first flange, the opening of the first flange being provided with a recess open to the second surface, having a wall preferably extending all the way round the opening, the wall tapering a few degrees outwards in relation to the wave guide wall, with a locking member accommodated in said recess, so that the second flange urges the locking member into fixation against the wave guide wall.

### BACKGROUND ART

Flanges attached to the wave guide ends are usually used in coupling two wave guides to each other. The wave guides are finally coupled together by connecting the flanges, using a bolted connection. A problem here is how the flange in its turn is to be fastened to the wave guide.

FR-A 2237102 shows an arrangement in attaching a first flange to a tube by clamping the flange to the outer wall of the tube by means of a second flange that urges a locking member accommodated in a recess in the second flange into fixation against the wall of the tube when the second flange is tightened to the first flange. The first flange is provided with an opening through which the tube is extending. In coupling two tubes together the respective flanges are joined by bolts and an intermediate pipe sleave is inserted between the flanges over the projecting tube ends.

### DISCLOSURE OF INVENTION

The present invention is based, as with the above-mentioned, known structure, on mechanically clamping the flange to the outer wall of the wave guide, and has the object of providing a secure and cheap attachment. The arrangement is characterized by the disclosures in the accompanying claims.

According to the invention the wave guide is attached to the first flange in a manner similar to that of the known arrangement. However, by the opening in the flange being provided with a shoulder the wave guide does not project from the flange on the coupling side. Thus coupling two wave guides together can be attained by joining the respective flanges immediately together without the need of any intermediate member. At the same time the arrangement is such that when the second flange is tightened to the first flange the wave guide is urged against the shoulder of the opening, whereby a very secure attachment is achieved.

### BRIEF DESCRIPTION OF DRAWINGS

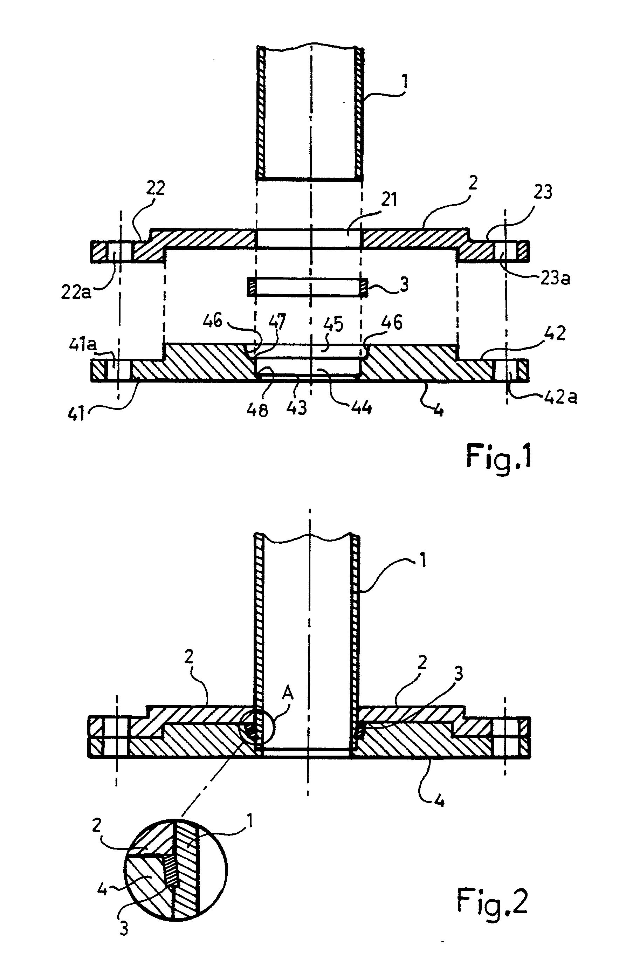

The arrangement in accordance with the invention will now be described in more detail with reference to the accompanying drawing, where Figure 1 is an exploded cross section of the parts in the arrangement before assembling on a wave guide and Figure 2 is the same cross section with the parts in the arrangement in their finally assembled state on the wave guide.

### BEST MODE FOR CARRYING OUT THE INVENTION

A wave guide with a rectangular or circular cross section and of a known kind is denoted by the numeral 1 in Figure 1. The proposed arrangement comprises three parts, namely a first flange 4, a second flange 2 and a locking member 3. The second, inward flange 2 is a compression flange and has an opening 21 of the same shape as the wave guide opening, e.g. rectangular, but of such dimensions that the flange 2 can be forced or eased onto the wave guide (see also Figure 2). The flange 2 further has two outer portions 22 and 23 with bored holes 22a and 23a.

The first, outer flange 4, which constitutes the wave guide flange proper for coupling to an other wave guide, has two outer portions 41 and 42 with associated bored holes 41a and 42a as with the second flange 2. The first flange 4 has first and second opposite surfaces and has an rectangular opening 44, a second rectangular opening 43 and a recess 45 open to the second surface, all of different dimensions but with a common centre line coinciding with the centre line of the rectangular opening 21 in the second flange 2. The second opening 43 is the opening towards the unillustrated wave guide which is to be coupled to the wave guide 1. The opening 44 has corresponding dimensions to the opening 21 and shall engage against the outer wall of the wave guide. The recess 45 has somewhat larger dimensions than those of the opening 44 and is formed with a bevelled wall 46 which tapers some few degrees, e.g. 3°-5°, towards the centre line (the symmetrical axis of flanges 2 and 4).

The third part of the arrangement in accordance with the invention is a locking member, in this case in the shape of a rectangular frame 3 placed between both flanges 2 and 4 according to Figure 1. The inner dimensions of the locking member 3 are suited to the outside dimensions of the wave guide 1, while its outside dimensions correspond to the recess 45. The wall thickness of the frame 3 is thus approximately as great as the width of the bottom 47 of the recess 45.

Figure 2 illustrates the arrangement in its finally assembled state where the second flange 2, the locking member 3 and the first flange 4 have been pushed onto the end of the wave guide and where the first flange 4 has been fastened and pressed to the second flange 2 with the aid of unillustrated nuts and screws through the holes 22a, 41a and 23a, 42a. With the flanges 2 and 4 pressed together, the inmost part of the second flange 2 will engage against the upper engagement surface of the locking member 3, and since the width of the locking member is somewhat greater than the width of the bottom 47 of the recess 45, the lower inner edge part of the locking member will cut into the outer wall of the wave guide 1. With the meeting surfaces of both flanges 2 and 4 fully, mutually engaged as illustrated in the detail enlargement A, the locking member 3 is pressed a distance into the wave guide wall and the wave guide itself has been pressed against the shoulder 48 between the openings 43 and 44 of the flange 4 so that the outer edge surface of the wave guide engages against the shoulder 48. There is thus obtained a fixed and secure attachment of the first flange 4 to the wave guide 1.

The locking member 3 does not need to be formed as a rectangular frame but can comprise such as two pins of the same thickness as the frame 3. These pins can then be situated one on either side of the wave guide.

## Claims

1. Arrangement for attaching a first flange (4) to a wave guide (1), the flange having first and second opposite surfaces being intended as a coupling member for coupling wave guides end-to-end and having an opening (44) engaging the outer surface of the wave guide along its cross section, the arrangement including a second flange (2) for fastening to said second surface of said first flange and having a cross section in relation to the cross section of the first flange (4) such that in its fastened position it engages against the first flange, the opening of the first flange being provided with a recess (45) open to the second surface, having a wall (46) preferably extending all the way round the opening, the wall (46) tapering a few degrees outwards in relation to the wave guide wall, with a locking member (3) accommodated in said recess, so that the second flange urges the locking member (3) into fixation against the wave guide wall (46), **characterized** in that the opening (44) of said first flange (4) is provided with a shoulder (48) defining a second opening (43) corresponding to the inner surface of the wave guide, and in that the wave guide is inserted in the opening (44) against the shoulder (48) of said first flange (4), and in that the locking member at the same time urges the wave guide against the shoulder (48) of the opening (44) of the first flange (4), when the second flange is tightened to the first flange.

## Patentansprüche

1. Anordnung zum Befestigen eines ersten Flansches (4) an einem Wellenleiter (1), wobei der Flansch erste und zweite, einander entgegengesetzt orientierte Oberflächen besitzt und als Kupplungsglied zum endseitigen Kuppeln von Wellenleitern bestimmt ist, und wobei er eine die äußere Oberfläche des Wellenleiters entlang seines Querschnittes umfassende Öffnung (44) besitzt, und die Anordnung einen zweiten Flansch (2) zum Befestigen an der genannten zweiten Oberfläche des ersten Flansches aufweist, mit einem zum Querschnitt des ersten Flansches (4) in einem solchen Verhältnis stehenden Querschnitt, daß der Flansch in seiner befestigten Position gegen den ersten Flansch anliegt, und wobei die Öffnung des ersten Flansches mit einer Ausnehmung (45) versehen ist, die zur zweiten Oberfläche hin offen ist und eine Wand (46) aufweist, die sich vorzugsweise ganz um die Öffnung erstreckt, wobei die Wand (46) relativ zur Wand des Wellenleiters um einige Grad schräg nach außen hin geneigt ist und in der Ausnehmung ein Verriegelungsglied (3) gelagert ist, derart, daß der zweite Flansch das Verriegelungsglied (3) zwecks Fixierung gegen die Wand des Wellenleiters drängt, dadurch **gekennzeichnet**, daß die Öffnung (44) des ersten Flansches (4) mit einer Schulter (48) versehen ist, die eine zweite Öffnung (43) entsprechend der inneren Oberfläche des Wellenleiters definiert, und daß der Wellenleiter bis gegen die Schulter (48) des ersten Flansches (4) in die Öffnung (44) eingefügt ist, und daß das Verriegelungsglied gleichzeitig den Wellenleiter gegen die Schulter (48) der Öffnung (44) des ersten Flansches (4) drängt, wenn der zweite Flansch an den ersten Flansch festgespannt ist.

## Revendications

1. Dispositif pour le montage d'une première bride (4) sur un guide d'ondes (1), la bride ayant des première et seconde surfaces opposées prévues pour constituer un élément de couplage destiné à coupler des guides d'ondes bout à bout et ayant une ouverture (44) engageant la surface extérieure du guide d'ondes suivant sa section transversale, le dispositif comprenant une seconde bride (2) pour une fixation à ladite seconde surface de ladite première bride et ayant une section transversale, par rapport à la section transversale de la première bride (4), telle que dans sa position fixée, elle porte contre la première bride, l'ouverture de la première bride étant pourvue d'un évidement (45) ouvert vers la seconde surface, ayant une paroi (46) qui s'étend de préférence sur tout le pourtour de l'ouverture, la paroi (46) s'évasant de quelques degrés vers l'extérieur par rapport à la paroi du guide d'ondes, un élément de blocage (3) étant logé dans ledit évidement, afin que la seconde bride repousse l'élément de blocage (3) en fixation contre la paroi (46) du guide d'ondes, caractérisé en ce que l'ouverture (44) de ladite première bride (4) est pourvue d'un épaulement (48) définissant une seconde ouverture (43) correspondant à la surface intérieure du guide d'ondes, et en ce que le guide d'ondes est inséré dans l'ouverture (44) contre l'épaulement (48) de ladite première bride (4), et en ce que l'élément de blocage repousse simultanément le guide d'ondes contre l'épaulement (48) de l'ouverture (44) de la première bride (4), lorsque la seconde bride est serrée sur la première bride.

Fig.1

Fig.2